# EUROPEAN PATENT APPLICATION

(11) **EP 3 734 711 A1**
(43) Date of publication of application: **04.11.2020**
(21) Application number: 20712827.3
(22) Date of filing: 05.03.2020
(51) Int. Cl.: H01M 2/34

(54) **PROTECTOR, BATTERY CORE AND BATTERY**

(30) Priority: 05.03.2019 CN 201920276506 U
(71) Applicant: Ningde Amperex Technology Ltd., Ningde, Fujian 350900 (CN)
(72) Inventor: YU, Yangyang, Ningde Fujian 350900 (CN); SONG, Huabing, Ningde Fujian 350900 (CN)
(74) Representative: CMS Cameron McKenna Nabarro Olswang LLP
(86) International application number: PCT/CN2020/078065
(87) International publication number: WO 2020/177746

(57) **Abstract**

A protector is provided. The protector includes: a first adaptor piece; a first impedance element; a second adaptor piece, the first impedance element is coupled to the first adaptor piece and the second adaptor piece, and the first adaptor piece is coupled to an electrode tab; and a second impedance element, the second impedance element is electrically connected to and located between the first impedance element and the second adaptor piece. The disclosure also provides a battery cell including the protector and a battery including the battery cell.

## Description

### FIELD

The disclosure generally relates to batteries, in particular, to a protector, battery cell containing the protector, and battery containing the battery cell.

### BACKGROUND

Lithium-ion batteries are usually equipped with a temperature-sensitive circuit breaker (TCO) as a protector. When the lithium-ion batteries are abused, such as when battery cells of the lithium-ion batteries are overcharged, which will generate large heat, the heat makes the temperature-sensitive circuit breaker to operate, thereby cutting off or substantially reducing the current to protect the battery cells.

However, the temperature-sensitive circuit breakers usually have a problem of not being able to operate in time, which causes the temperature-sensitive circuit breakers to be unable to cut off or reduce the current in time, so the temperature-sensitive circuit breakers cannot effectively protect the battery cells.

### SUMMARY

What is needed is a protector, a battery cell, and a battery. The protector has a more timely action, thereby effectively protecting the battery cell and the battery.

A technical solution of this application is implemented as follows:

In an aspect of the present application, a protector is provided. The protector includes: a first adaptor piece; a first impedance element; a second adaptor piece, the first impedance element is coupled to the first adaptor piece and the second adaptor piece, and the first adaptor piece is coupled to an electrode tab; and a second impedance element, the second impedance element is electrically connected to and located between the first impedance element and the second adaptor piece.

In some embodiments, the first impedance element includes: a first connecting piece; a second connecting piece; a first element; and an elastic piece. When a temperature of the elastic piece is less than a first temperature, the first connecting piece is electrically contact with the second connecting piece directly. When the temperature of the elastic piece is greater than or equal to the first temperature, the elastic piece deforms to form a series circuit by the first connecting piece, the first element, the elastic piece, and the second connecting piece.

In some embodiments, the first element is located between the first connecting piece and the elastic piece, and the elastic piece is located between the first element and the second connecting piece.

In some embodiments, the first element is a positive temperature coefficient thermistor.

In some embodiments, the second impedance element includes a resistor.

In some embodiments, a resistance value of the second impedance element is greater than or equal to 1 mQ and less than or equal to 10 mΩ.

In some embodiments, the second impedance element is a positive temperature coefficient thermistor or the same as the first impedance element.

In some embodiments, the protector includes at least two second impedance elements.

On the other hand of the present application, a battery cell is provided. The battery cell includes a cell body and the protector above-mentioned. The cell body is provided with a first electrode tab. The first electrode tab is coupled to the first adaptor piece.

On another hand of the present application, a battery is provided. The battery includes the battery cell above-mentioned.

In the present disclosure, the second impedance element is electrically connected to and located between the first impedance element and the second adaptor piece, so that a heat dissipation path of the first impedance element to the second adaptor piece is changed to a heat dissipation path of the first impedance element to the second impedance element, and to the second adaptor piece, so that a heat dissipation distance of the protector is lengthened, thereby reducing a heat dissipation speed of the first impedance element. During an overcharging of the battery cell, the second impedance element can generate heat by itself, which can inhibit the first impedance element from dissipating heat to the outside, so that the protector of the present disclosure can act in time to effectively protect the battery cell.

### BRIEF DESCRIPTION OF THE DRAWINGS

Implementations of the present disclosure will now be described, by way of embodiments, with reference to the attached figures.

In order to more clearly explain embodiments of the present disclosure or the technical solutions in a prior art, drawings used in the embodiments will be briefly introduced below. Obviously, the drawings in the following description are only some of the present disclosure. For ordinary technicians in the prior art, other embodiments may be obtained based on these drawings without paying creative labor.
FIG. 1 is a perspective view of a temperature-sensitive circuit breaker according to the prior art.
FIG. 2 is a perspective view of an embodiment of a protector according to the present disclosure.
FIG. 3 is a perspective view of a first impedance element of FIG. 2.
FIGS. 4 to 6 are a perspective view of various embodiments of a protector according to the present disclosure.
FIG. 7 is a perspective view of an embodiment of a battery cell according to the present disclosure.

Description of symbols for main elements: 100 represents a temperature-sensitive circuit breaker, 110 and 210 represent a first adaptor piece, 120 represents a circuit breaker, 130 and 230 represent a second adaptor piece, 200 represents a protector, 220 represents a first impedance element, 240 represents a second impedance element, 241 represents a PTC thermistor, 222 represents a first connecting piece, 224 represents a second connecting piece, 226 represents a first element, 228 represents an elastic piece, 229 represents a contact point, 242 represents a resistor, 700 represents a battery cell, 710 represents a cell body, 712 represents a first electrode tab.

Implementations of the disclosure will now be described, with reference to the drawings.

### DETAILED DESCRIPTION

Implementations of the disclosure will now be described, by way of embodiments only, with reference to the drawings. The disclosure is illustrative only, and changes may be made in the detail within the principles of the present disclosure. It will, therefore, be appreciated that the embodiments may be modified within the scope of the claims.

It should be noted that when an element is considered to be "connected" to another element, it may be directly connected to another element or there may be a centered element at the same time. When an element is considered to be "disposed on" another element, it can be an element that is disposed directly on the other element or a centered element may be present at the same time.

Unless otherwise defined, all technical terms used herein have the same meaning as commonly understood by one of ordinary skill in the art. The technical terms used herein are not to be considered as limiting the scope of the embodiments. The term "and / or" as used herein includes any and all combinations of one or more of the associated listed items.

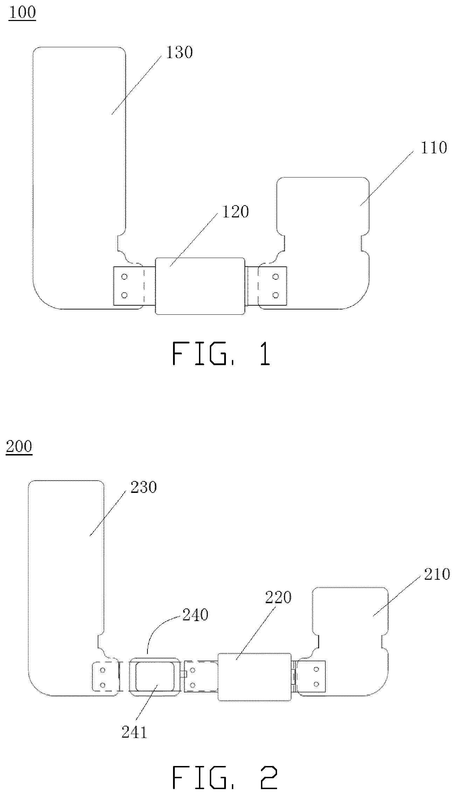

FIG. 1 is a perspective view of a temperature-sensitive circuit breaker according to the prior art. The temperature-sensitive circuit breaker 100 includes a first adaptor piece 110, a circuit breaker 120, and a second adaptor piece 130. The circuit breaker 120 is connected to and located between the first adaptor piece 110 and the second adaptor piece 130. The circuit breaker 120 is in series with a battery cell by the first adaptor piece 110. Specifically, the first adaptor piece 110 is coupled to an electrode tab of a battery cell. During overcharging of the battery cell, a temperature of the second adaptor piece 130 is low, so heat will be transferred from the circuit breaker 120 to the second adaptor piece 130, resulting in a decrease in a temperature of the circuit breaker 120, thereby causing action of the circuit breaker 120 is delayed, which causes the battery cell to be further charged and overheated.

In order to solve the problem that the temperature-sensitive circuit breaker does not operate in a timely manner, a method is to use a temperature-sensitive circuit breaker with a relatively low operating temperature to ensure that the temperature-sensitive circuit breaker can operate in a timely manner when the battery cell heats up. However, the method of the temperature-sensing circuit breaker with a lower operating temperature limits a high-current discharge capacity of the battery cell, or the temperature-sensing circuit breaker will operate in a high-power discharge mode, causing the battery cell to fail to work properly and equipment to be shut down. Another method is to improve an overcharge performance of a battery system by improving electrolyte. However, the improved electrolyte will deteriorate electrochemical performance of the battery cell, for example, high-temperature storage performance of the battery cell.

FIG. 2 is a perspective view of an embodiment of a protector according to the present disclosure. The protector 100 includes a first adaptor piece 210, a first impedance element 220, a second adaptor piece 230, and a second impedance element 240. The first impedance element 220 is coupled to the first adaptor piece 210 and the second adaptor piece 230. The first adaptor piece 210 is coupled to an electrode tab. The second impedance element 240 is connected to and located between the first impedance element 220 and the second adaptor piece 230.

The second impedance element 240 is connected to and located between the first impedance element 220 and the second adaptor piece 230, so that a heat dissipation path of the first impedance element 220 to the second adaptor piece 230 is changed to a heat dissipation path of the first impedance element 220 to the second impedance element 240, and to the second adaptor piece 230, so that a heat dissipation distance of the protector 100 is lengthened, thereby reducing a heat dissipation speed of the first impedance element 220. During an overcharging of a battery cell, the second impedance element 240 can generate heat by itself, which can inhibit the first impedance element 220 from dissipating heat to the outside, so that the protector 100 of the present disclosure can act in time to effectively protect the battery cell.

Continuing to referring to FIG. 2, the first adaptor piece 210 may be connected to the first impedance element 220 by laser welding, the first impedance element 220 may be connected to the second impedance element 240 by laser welding, and the second impedance element 240 may be connected to the second adaptor piece 230 by laser welding, too. In some embodiments, the first adaptor piece 210 may be connected to the first impedance element 220 by any other properly connecting manners, the first impedance element 220 may be connected to the second impedance element 240 by any other properly connecting manners, and second impedance element 240 may be connected to the second adaptor piece 230 by any other properly connecting manners.

The second impedance element 240 may include a positive temperature coefficient (PTC) thermistor 241. The PTC thermistor is a kind of semiconductor resistor with temperature sensitivity. When it exceeds a certain temperature (Curie temperature), resistance value of the PTC thermistor will increase stepwise with the increase of temperature. Therefore, by connecting the PTC thermistor 241 between the first impedance element 220 and the second adaptor piece 230, the heat dissipation distance of the first impedance element 220 to the second adaptor piece 230 is extended on the one hand, and on the other hand, the PTC thermistor 241 itself has a resistance value, which can generate heat and inhibit the first impedance element 220 from dissipating heat to the outside.

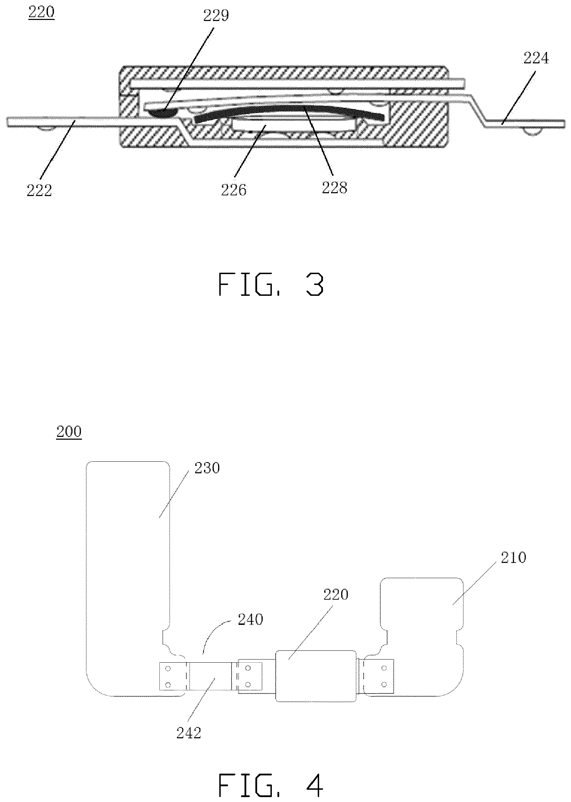

FIG. 3 is a perspective view of the first impedance element 220. The first impedance element 220 includes a first connecting piece 222, a second connecting piece 224, a first element 226, and an elastic piece 228. When a temperature of the elastic piece 228 is less than a first temperature (for example, a designed operating temperature), the first connecting piece 222 is in direct electrical contact with the second connecting piece 224. For example, the first connecting piece 222 is electrically contact with the second connecting piece 224 by a contact point 229 in direct. When the temperature of the elastic piece 228 is greater than or equal to the first temperature, a series circuit is defined by the first connecting piece 222, the first element 226, the elastic piece 228, and the second connecting piece 224. For example, the elastic piece 228 deforms to separate the contact points 229 from the first connecting piece 222 and the second connecting piece 224, thereby forming the series circuit by the first connecting piece 222, the first element 226, the elastic piece 228, and the second connecting piece 224.

In some embodiments, the first element 226 is located between the first connecting piece 222 and the elastic piece 228, and the elastic piece 228 is located between the first element 226 and the second connecting piece 224. It should be understood that any suitable configuration may be made for the arrangement of the first connecting piece 222, the second connecting piece 224, the first element 226, and the elastic piece 228 of the first impedance element 220, which is not limited in this disclosure.

Continuing to referring to FIG. 3, the first element 226 may be a PTC thermistor. As described above, when a certain temperature (Curie temperature) is exceeded, the resistance value of the PTC thermistor increases stepwise with the increase of temperature. Therefore, when the temperature of the elastic piece 228 is equal to or greater than the first temperature, the first connecting piece 222, the first element 226, the elastic piece 228, and the second connecting piece 224 form a series circuit. At this time, a large current flows through the PTC thermistor, which causes the resistance of the PTC thermistor to increase, which is equivalent to connecting a large resistor in series with the series circuit formed by the first connecting piece 222, the first element 226, the elastic piece 228, and the second connecting piece 224, so that the circuit of the series circuit is close to be broken, thereby preventing the temperature from continuing raise to protect the battery cell.

FIG. 4 is a perspective view of a protector according to an embodiment of the present disclosure. As shown in FIG. 4, the second impedance element 240 includes a resistor 242. The resistor 242 is electrically connected to and located between the first impedance element 220 and the second adaptor piece 230, which can lengthen the heat dissipation distance of the first impedance element 220 to the second adaptor piece 230. Moreover, the resistor 242 itself has a resistance value, which can generate heat and inhibit the first impedance element 220 from dissipating heat to the outside.

In some embodiments, the protector 200 includes at least two second impedance elements 240. That is, a number of the second impedance elements 240 may be two or more.

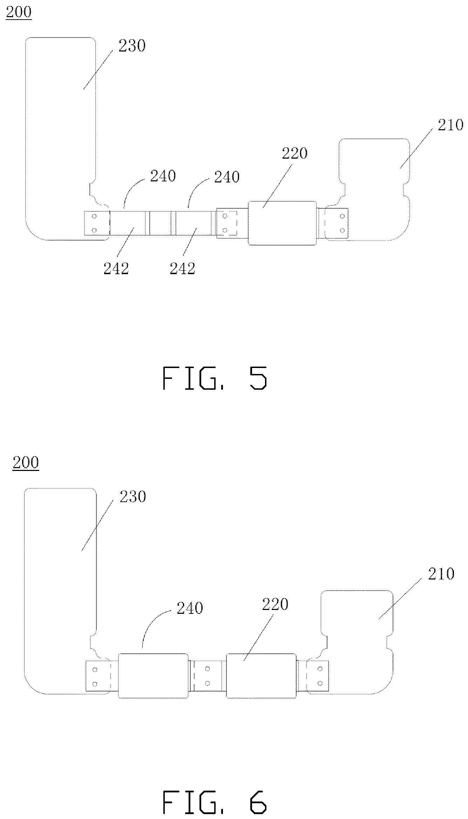

FIG. 5 is a perspective view of a protector according to an embodiment of the present disclosure. As shown in FIG. 5, the number of the second impedance elements 240 is two, and each of the two second impedance elements 240 includes a resistor 242. It should be understood that, depending on the specific application, the second impedance element 240 may be any other suitable element, and the number of the second impedance element 240 may be any other suitable number.

FIG. 6 is a perspective view of a protector according to an embodiment of the present disclosure. As shown in FIG. 6, the second impedance element 240 may be the same element as the first impedance element 220. In one embodiment, the second impedance element 240 may have a structure shown in FIG. 3. In this embodiment, connection pins of the first impedance element 220 and connection pins of the second impedance element 240 are metals (for example, copper) that cannot be directly welded by laser, and the first impedance element 220 may be electrically connected to the second impedance element 240 by nickel. Since the second impedance element 240 is the same element as the first impedance element 220, the second impedance element 240 can improve the heat conduction between the battery cell and the second impedance element 240 while lengthening the heat dissipation path of the first impedance element 220, which can generate heat and inhibit the first impedance element 220 from dissipating heat to the outside.

In some embodiments, a resistance value of the second impedance element 240 is greater than or equal to 1 mQ and less than or equal to 10 mΩ. According to the specific application, the resistance value of the second impedance element 240 may be appropriately configured, which is not limited in this disclosure.

The beneficial effects achieved by the protector of the present disclosure are described below by way of examples. Connecting the protector involved in this disclosure to a battery cell and performing an overcharge test. Taking a battery cell with a temperature-sensitive circuit breaker without a second impedance element as comparative example 1, performing a 1C / 10V overcharge test, and observing records of an overcharge pass rate of each of examples 1-4 and comparative example 1. Table 1 shows a comparison result of the overcharge pass rates of the examples 1-4 and comparative example 1.

### Example 1

The battery cell of example 1 uses the protector 200 shown in FIG. 6, in which the resistance values of the first impedance element 220 and the second impedance element 240 are both 3 mΩ. The 1C / 10V overcharge test is performed on the battery cell of example 1.

### Example 2

The battery cell of example 2 uses the protector 200 shown in FIG. 2, in which the resistance value of the PTC thermistor 241 is 5 mΩ. The 1C / 10V overcharge test is performed on the battery cell of example 2.

### Example 3

The battery cell of example 3 uses the protector 200 shown in FIG. 4, in which the resistance value of the resistor 242 is 4 mΩ. The 1C / 10V overcharge test is performed on the battery cell of example 3.

### Example 4

The battery cell of example 4 uses the protector 200 shown in FIG. 5, and the resistance value of the two resistors 242 is 2 mΩ. The 1C / 10V overcharge test is performed on the battery cell of example 4.

**Table 1**

| Groups | overcharge pass rate | Surface temperature of the battery cell when the protector is in action |
|---|---|---|
| example 1 | 10/10 pass | 73.78 |
| example 2 | 10/10 pass | 75.03 |
| example 3 | 10/10 pass | 76.26 |
| example 4 | 10/10 pass | 75.07 |
| comparative example 1 | 7/10 pass | 82.63 |

It can be seen from the overcharge test result shown in table 1 that the overcharge pass rates of examples 1 to 4 are all 10 / 10 pass, which is significantly better than the overcharge pass rate of 7 / 10 pass of comparative example 1. In addition, when the protector of Example 1 to Example 4 is operated, the surface temperature of the battery cell is lower than that of comparative example 1 , which indicates that the protector provided in this disclosure is easier to act (trigger) during the overcharge test of the battery cell. In other words, the protector provided in this disclosure operates more promptly during the overcharge test of the battery cell. In addition, since the second impedance element of example 1 is beneficial to lengthen the heat dissipation path of the first impedance element, and to improve the heat conduction between the second impedance element and the battery cell, so the improvement effect of the battery cell of example 1 is more obvious.

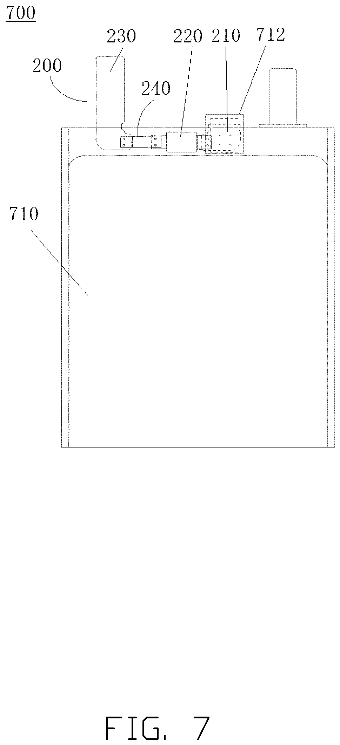

As shown in FIG. 7, according to other aspect of the present disclosure, a battery cell 700 is further provided. The battery cell 700 includes a battery body 710 and the protector 200 above-mentioned. The battery body 710 is provided with a first electrode tab 712. The first pole tab 712 is coupled to the first adaptor piece 210 of the protector 200. FIG. 7 illustrates a case where the battery cell 700 includes the protector 200 shown in FIG. 2. It should be understood that the battery cell of the present disclosure may include any of the above-mentioned protectors.

According to another aspect of the present disclosure, a battery is further provided. The battery includes the battery cell above-mentioned.

The disclosure is illustrative only, and changes may be made in the detail, including in matters of shape, size, and arrangement of the parts within the principles of the present disclosure, up to and including the full extent established by the broad general meaning of the terms used in the claims. It will, therefore, be appreciated that the embodiments described above may be modified within the scope of the claims.

## Claims

1. A protector, **characterized in that**, the protector comprises:
a first adaptor piece; the first adaptor piece is coupled to an electrode tab;
a first impedance element;
a second adaptor piece; the first impedance element is coupled to the first adaptor piece and the second adaptor piece; and
a second impedance element, the second impedance element is electrically connected to and located between the first impedance element and the second adaptor piece.

2. The protector of claim 1, **characterized in that**, the first impedance element comprises:
a first connecting piece;
a second connecting piece;
a first element; and
an elastic piece; when a temperature of the elastic piece is less than a first temperature, the first connecting piece is electrically contact with the second connecting piece directly; and when the temperature of the elastic piece is greater than or equal to the first temperature, the elastic piece deforms to form a series circuit by the first connecting piece, the first element, the elastic piece, and the second connecting piece.

3. The protector of claim 2, **characterized in that**, the first element is located between the first connecting piece and the elastic piece, and the elastic piece is located between the first element and the second connecting piece.

4. The protector of claim 2, **characterized in that**, the first element is a positive temperature coefficient thermistor.

5. The protector of claim 1, **characterized in that**, a resistance value of the second impedance element is greater than or equal to 1 mQ and less than or equal to 10 mΩ.

6. The protector of claim 5, **characterized in that**, the second impedance element includes a resistor.

7. The protector of claim 1, **characterized in that**, the second impedance element is a positive temperature coefficient thermistor or the same as the first impedance element.

8. The protector of claim 1, **characterized in that**, the protector includes at least two second impedance elements.

9. A battery cell, comprising:
a cell body, **characterized in that**, the cell body is provided with a first electrode tab; and
a protector of any one of claims 1 to 8, **characterized in that**, the first electrode tab is coupled to the first adaptor piece.

10. A battery, **characterized in that**, the battery comprises a battery cell of the claim 9.
